# EUROPÄISCHE PATENTANMELDUNG

(11) **EP 2 514 632 A1**
(43) Veröffentlichungstag der Anmeldung: **24.10.2012**
(21) Anmeldenummer: 12156926.3
(22) Anmeldetag: 24.02.2012
(51) Int. Cl.: B60N 2/427, B60N 2/42

(54) **Fahrzeugsitzaufnahme**

(71) Anmelder: ISE Automotive GmbH, 51702 Bergneustadt (DE)
(72) Erfinder: Kern, Alexander, 51597 Morsbach (DE)
(74) Vertreter: Kalkoff & Partner

(57) **Zusammenfassung**

Die Erfindung betrifft eine Fahrzeugsitzaufnahme, mit einem mit einem Fahrzeugboden verbindbaren Grundkörper und einem mit einem Fahrzeugsitz, insbesondere einem Schienenpaar eines Fahrzeugsitzes, bevorzugt einer Bodenschiene eines Fahrzeugsitzes verbindbaren Aufnahmekörper. Um eine Fahrzeugsitzaufnahme sowie eine Auslösevorrichtung für eine Fahrzeugsitzaufnahme bereitzustellen, welche im Crashfall eine Verlagerung des Fahrzeugsitzes ermöglicht, ist vorgesehen, dass der Aufnahmekörper im Normalbetrieb durch ein verlagerbares und in der Normallage des Aufnahmekörpers mit diesem und dem Grundkörper in Eingriff befindliches Sperrelement lagestabil am Grundkörper angeordnet ist, wobei das Sperrelement derart mit einer Zug- und/oder Schubvorrichtung mechanisch verbunden ist, dass durch eine im Crashfall stattfindende Betätigung der Zug- und/oder Schubvorrichtung das Sperrelement mit dem Grundkörper und/oder dem Aufnahmekörper außer Eingriff gelangt.

## Beschreibung

Die Erfindung betrifft eine Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper.

Kraftfahrzeugsitze, insbesondere Pkw-Fahrzeugsitze werden üblicherweise über standardisierte, an den Fahrzeugsitzen angeordnete Sitzschienenpaare, welche eine Längsverstellbarkeit des Fahrzeugsitzes gegenüber einem Fahrzeugboden ermöglichen, mit dem Fahrzeugboden verbunden. Hierzu sind die Fahrzeugböden in der Regel bereits mit entsprechenden Befestigungsöffnungen vorbereitet, welche bspw. durch eine mit einem Gewinde versehene Bohrung gebildet sind, die ein einfaches Anschrauben der Unterschiene der Schienenpaare der Fahrzeugsitze mittels geeigneter Verbindungsschrauben am Fahrzeugboden ermöglichen. Durch eine entsprechende Verschraubung wird die Bodenschiene ortsfest am Fahrzeug angeordnet. Eine Längsverstellung des Fahrzeugsitzes, durch die der Nutzer eine Anpassung an seine Bedürfnisse vornehmen kann, erfolgt durch eine Verschiebung einer Sitzschiene gegenüber der Bodenschiene, wobei im Betrieb des Fahrzeuges eine eingestellte Sitzposition gegenüber dem Fahrzeugboden festgelegt ist, so dass der Fahrzeugsitz über die bestehenden Verschraubungen weitestgehend starr mit dem Fahrzeugboden verbunden ist.

Nach Verkehrsunfällen klagen die Fahrzeuginsassen häufig über Schmerzen im Nackenbereich, welche dann als Schleudertrauma diagnostiziert werden. Dieses tritt selbst dann auf, wenn der zugrundeliegende Unfall mit einer vergleichsweise geringen Geschwindigkeit erfolgte. Als Schleudertrauma werden dabei Krankheitssymptome angesehen, die aus einer Beschleunigung und Überstreckung des Kopfes resultieren. Betroffen sind dabei üblicherweise Fahrzeuginsassen, die sich in einem durch einen Heckaufprall betroffenen Fahrzeug befinden.

Ursächlich für den die Verletzungen hervorrufenden Bewegungsablauf des Kopfes der Fahrzeuginsassen ist dabei der sogenannte Whiplash-Effekt, wobei in Folge einer rückwärts gerichteten Bewegung der Fahrzeuginsassen bei einem Heckaufprall zwar der Oberkörper durch die starre Rückenlehne abgefangen wird, der Kopf jedoch oberhalb des Nackens plötzlich abknickt.

Zur Verminderung des Whiplash- oder Peitschenschlag-Effekts sind bereits eine Vielzahl von Lösungsansätzen bekannt. Neben der Verbesserung der Kopfstützen, wobei auch eine aktive Verlagerung der Kopfstützen in Richtung der Fahrzeuginsassen vorgenommen wird, existieren auch Systeme, die durch eine geeignete Ausgestaltung der Fahrzeugsitze im Crashfall eine Verlagerbarkeit der Rückenlehne ermöglichen. Die Verlagerbarkeit der Rückenlehne soll dabei dazu dienen, über die rückwärts gerichtete Bewegung der Rückenlehne den Körper aufzufangen und die crashinduzierte Bewegung sanft abzubremsen, um so die aus einem abrupten Abbremsen der Bewegung des Rückens des Insassen resultierende Kopfbeschleunigung zu reduzieren. Die bekannten Systeme setzen jedoch eine umfangreiche und kostenintensive Ausgestaltung der Fahrzeugsitze voraus, um eine im Crashfall bewegliche Anordnung, bspw. der Rückenlehne, zu ermöglichen.

Der Erfindung liegt die Aufgabe zugrunde, eine Fahrzeugsitzaufnahme sowie eine Auslösevorrichtung für eine Fahrzeugsitzaufnahme bereitzustellen, welche im Crashfall eine Verlagerung des Fahrzeugsitzes ermöglicht.

Die Erfindung löst die Aufgabe durch eine Fahrzeugsitzaufnahme mit den Merkmalen des Anspruchs 1 sowie eine Auslösevorrichtung mit den Merkmalen des Anspruchs 13. Vorteilhafte Weiterbildungen der Erfindung sind in den abhängigen Ansprüchen angegeben.

Kennzeichnend für die erfindungsgemäße Fahrzeugsitzaufnahme ist, dass der Aufnahmekörper in Normalbetrieb durch ein verlagerbares und in der Normallage des Aufnahmekörpers mit diesem und dem Grundkörper in Eingriff befindliches Sperrelement lagestabil am Grundkörper angeordnet ist, wobei das Sperrelement derart mit einer Zug- und/oder Schubvorrichtung mechanisch verbunden ist, dass durch eine im Crashfall stattfindende Betätigung der Zug- und/oder Schubvorrichtung das Sperrelement mit dem Grundkörper und/oder dem Aufnahmekörper außer Eingriff gelangt.

Ein wesentliches Merkmal der erfindungsgemäßen Fahrzeugsitzaufnahme besteht darin, dass der Aufnahmekörper, welcher zur Verbindung des Fahrzeugsitzes mit der Fahrzeugsitzaufnahme dient, im Normalbetrieb eines Kraftfahrzeuges lagesicher in seiner Normallage arretiert ist, so dass aufgrund der lagesicheren Anordnung der Fahrzeugsitzaufnahme am Fahrzeugboden insgesamt eine zuverlässige Anbindung des Fahrzeugsitzes am Fahrzeugboden gegeben ist. Im Crashfall, insbesondere im Falle eines Heckaufpralls auf das mit einer Fahrzeugsitzaufnahme versehene Fahrzeug besteht jedoch die Möglichkeit, die lagestabile Verbindung zwischen dem Aufnahmekörper und dem am Fahrzeugboden ortsfest angeordneten Grundkörper aufzulösen, so dass der Aufnahmekörper relativ gegenüber dem Grundkörper verlagerbar ist, was wiederum eine Verlagerung des Fahrzeugsitzes in Verstellrichtung des Aufnahmekörpers gegenüber dem Grundkörper ermöglicht.

Die lagestabile Verbindung im Normalbetrieb wird dabei durch ein mit dem Grundkörper und dem Aufnahmekörper in Eingriff befindliches Sperrelement erzeugt, welches gegenüber dem Aufnahmekörper und/oder dem Grundkörper verlagert werden muss, bis das Sperrelement mit dem Grundkörper und/oder dem Aufnahmekörper außer Eingriff gelangt, um eine Verstellung des Aufnahmekörpers aus seiner Normallage in Richtung auf eine Crashlage zu ermöglichen. Hierzu ist erfindungsgemäß eine Zug- und/oder Schubvorrichtung mechanisch derart mit dem Sperrelement verbunden, dass durch eine im Crashfall stattfindende Betätigung der Zug- und/oder Schubvorrichtung das Sperrelement verstellt wird, so dass dieses mit dem Grundkörper und/oder dem Aufnahmekörper außer Eingriff gelangt.

Die erfindungsgemäße Fahrzeugsitzaufnahme zeichnet sich dadurch aus, dass sie im Normalbetrieb des Kraftfahrzeuges eine lagestabile Anordnung eines unter Verwendung der Fahrzeugsitzaufnahme angeordneten Fahrzeugsitzes gewährleistet. Im Crashfall besteht darüber hinaus die Möglichkeit, die lagestabile Verbindung zwischen dem Grundkörper und dem Aufnahmekörper durch eine einfache Betätigung der Zug- und/oder Schubvorrichtung aufzulösen, so dass der Aufnahmekörper dann gegenüber dem Grundkörper und somit auch der Fahrzeugsitz gegenüber dem Fahrzeugboden verstellbar ist. Die Verwendung einer Zug- und/oder Schubvorrichtung erlaubt es dabei, die erforderliche Auslösebewegung mittels der Zug- und/oder Schubvorrichtung auf die Fahrzeugsitzaufnahme zu übertragen, so dass eine Auslösevorrichtung, welche ebenfalls mit der Zug- und/oder Schubvorrichtung verbunden ist, unabhängig von der Fahrzeugsitzaufnahme angeordnet werden kann. Diese erfindungsgemäße Ausgestaltung lässt überdies eine besonders einfache sowie kostengünstige und zuverlässige Ausgestaltung der Fahrzeugsitzaufnahme zu.

Der Grad der Verlagerbarkeit des Fahrzeugsitzes sowie die Bewegungsrichtung ist dabei unter anderem von der Positionierung der Fahrzeugsitzaufnahme gegenüber dem Fahrzeugsitz sowie der Ausgestaltung der Verbindung von Grundkörper und Aufnahmekörper abhängig. Im Falle der ausschließlichen Verwendung der erfindungsgemäßen Fahrzeugsitzaufnahme zur Anordnung eines Fahrzeugsitzes in einem Fahrzeug kann über eine crashspezifische Auswahl der zu betätigenden Fahrzeugsitzaufnahmen die Bewegungsmöglichkeit des Fahrzeugsitzes nach der Aktivierung frei festgelegt werden. So können die Fahrzeugsitzaufnahmen sowohl derart betätigt werden, dass ein seitliches Verkippen des Fahrzeugsitzes möglich ist, es kann jedoch auch eine Betätigung der Zug- und/oder Schubvorrichtung erfolgen, die ein - bezogen auf die Einbaulage - Verkippen des Fahrzeugsitzes um eine Fahrzeugquerachse ermöglicht.

Eine bevorzugte Verwendung der Fahrzeugsitzaufnahme zur Befestigung der - bezogen auf die Einbaulage - vorderen Sitzenden des Fahrzeugsitzes ermöglicht im Crashfall ein Anheben des vorderen Bereichs des Fahrzeugsitzes, wodurch der gesamte Sitz um einen hinteren Anlenkpunkt mit dem Fahrzeugboden verschwenkt werden kann. Die hieraus resultierende Bewegung der Rückenlehne des Fahrzeugsitzes bewirkt eine Dämpfung der im Falle eines Heckaufpralls auftretenden Bewegungen der Fahrzeuginsassen, wodurch eine plötzliche Überstreckung des Kopfes aufgrund einer abrupten Abbremsung des Insassenrückens, wie dies bei starren Rückenlehnen der Fall ist, vermindert wird und somit Verletzungen vermieden oder zumindest deutlich reduziert werden.

Die Lagesicherung des Aufnahmekörpers an dem Grundkörper in der Normallage des Aufnahmekörpers erfolgt nach einer vorteilhaften Weiterbildung der Erfindung dadurch, dass der Aufnahmekörper in der Normallage formschlüssig mit dem Sperrelement verbunden ist. Diese formschlüssige Anordnung, wobei der Formschluss bezogen auf die Bewegungsrichtung des Aufnahmekörpers im Crashfall vorliegt, sichert in besonders vorteilhafter Weise die Lage des Aufnahmekörpers im Normalbetrieb und gewährleistet darüber hinaus, dass durch eine Auflösung der formschlüssigen Verbindung eine einfache Freigabe des Aufnahmekörpers erfolgen kann. Im Crashfall kann dann eine sichere Verlagerung des mit dem Aufnahmekörper verbundenen Fahrzeugsitzes erfolgen. Zur Aufhebung der Verbindung ist es dabei ausreichend, wenn das Sperrelement allein mit dem Aufnahmekörper außer Eingriff gelangt, d. h. der mit dem Aufnahmekörper bestehende Formschluss aufgehoben wird. Eine Betätigung des Sperrelements in entsprechender Weise erfolgt dabei über die erfindungsgemäß vorgesehene Zug- und/oder Schubvorrichtung, welche derart mechanisch mit dem Sperrelement verbunden ist, dass über eine Betätigung der Zug- und/oder Schubvorrichtung eine Verlagerung des Sperrelements vorgenommen werden kann, bis dieses mit dem Aufnahmekörper außer Eingriff gelangt.

Die erfindungsgemäße Fahrzeugsitzaufnahme stellt insgesamt eine besonders einfache Möglichkeit dar, im Falle eines Unfalls, insbesondere eines Heckaufpralls, aber auch eines Seitenaufpralls, durch die nach der Auslösung bestehende Möglichkeit der Verlagerbarkeit des mit den Fahrzeugsitzaufnahmen verbundenen Fahrzeugsitzes, drohende Verletzungen der Fahrzeuginsassen zu verhindern oder deren Schwere zumindest deutlich zu reduzieren. Die Fahrzeugsitzaufnahme lässt sich dabei in besonders einfacher Weise mit dem Fahrzeugboden verbinden und zeichnet sich dabei insbesondere dadurch aus, dass eine Anpassung der Fahrzeugsitze zu deren Verbindung mit den Fahrzeugsitzaufnahmen hierfür nicht erforderlich ist. Die Fahrzeugsitze können in ihrer standardisierten Form über die üblicherweise an den Bodenschienen vorgesehenen Befestigungsöffnungen mit dem Aufnahmekörper der Fahrzeugsitzaufnahme verbunden werden, wobei diese bevorzugt miteinander verschraubt werden. Im Normalbetrieb weist der unter Verwendung einer erfindungsgemäßen Fahrzeugsitzaufnahme angeordnete Fahrzeugsitz keinerlei gegenüber in herkömmlicher Weise angeordneten Fahrzeugsitzen abweichende Eigenschaft auf. Im Crashfall wirdjedoch durch die Fahrzeugsitzaufnahme eine Fahrzeugsitzbewegung ermöglicht, durch welche Verletzungen der Fahrzeuginsassen verhindert oder zumindest deutlich in ihrer Schwere reduziert werden.

In ergänzender Weise können dabei dadurch Verletzungen reduziert werden, dass nach einer vorteilhaften Weiterbildung der Erfindung an dem Aufnahmekörper ein sich während der Bewegung aus der Normallage in Richtung auf die Crashlage elastisch und/oder plastisch verformbares Absorptionselement angeordnet ist. Das Absorptionselement, das auch nur in Teilbereichen der Bewegungsstrecke des Aufnahmekörpers ausgehend aus der Normallage in Richtung auf die Crashlage eine Verformung erfahren kann oder aber auch über den gesamten Bewegungsbereich des Aufnahmekörpers eine Verformung erfährt, erlaubt es, über die Ausgestaltung und Auswahl des Absorptionselement in besonders einfacher und komfortabler Weise den zur Verlagerung des Aufnahmekörpers erforderlichen Energieaufwand und damit den erzielbaren Energieabbau festzulegen.

Die Ausgestaltung sowie die Anordnung des Absorptionselements ist dabei grundsätzlich frei wählbar. Sowohl elastische als auch plastisch verformbare Absorptionselemente lassen sich in beliebiger Form besonders einfach und kostengünstig herstellen und ermöglichen einen hohen Energieaufbau und weisen darüber hinaus die Eigenschaft auf, dass sie sich gut an dem Grundkörper und/oder dem Aufnahmekörper anordnen lassen. Im Falle der Verwendung eines plastisch verformbaren Absorptionselements kann erreicht werden, dass nach der Deformation des Absorptionselements keine Rückstellkraft durch das Absorptionselement in Richtung auf die Normallage aufgebracht wird.

Nach einer besonders vorteilhaften Ausgestaltung der Erfindung ist vorgesehen, dass das Absorptionselement durch ein Blechelement, bevorzugt gewelltes Blechelement gebildet ist. Gemäß dieser Ausgestaltung der Erfindung erfolgt ein Energieabbau über eine Verformung des Blechelements während der Bewegung des Aufnahmekörpers gegenüber dem Grundkörper, wobei der Aufnahmekörper mit dem Blechelement verbunden ist. Die Verwendung eines Blechelements weist den Vorteil auf, dass dieses eine besonders flache Bauform der Fahrzeugsitzaufnahme ermöglicht. Insbesondere die Verwendung eines gewellten Blechelements erlaubt es, einen hohen Energieabbau zu erzielen, wobei gleichzeitig das Blechelement eine nur geringe Dicke aufweisen muss.

Grundsätzlich kann die Verstellbewegung des Aufnahmekörpers aus der Normallage in Richtung auf die Crashlage bzw. die Crashlage in beliebiger Weise festgelegt werden. So können hierzu bspw. Anschlagkörper an dem Aufnahmekörper selbst vorgesehen sein, welche in der Crashlage mit entsprechenden Anschlagkörpern an dem Grundkörper in Eingriff gelangen und somit die maximale Verstellbarkeit festlegen. Nach einer besonders vorteilhaften Ausgestaltung der Erfindung ist jedoch vorgesehen, dass das Blechelement Anschlagkörper zur Begrenzung der Verstellbewegung des Aufnahmekörpers aus dessen Normallage aufweist. Gemäß dieser Ausgestaltung der Erfindung ist über das Blechelement die maximale Verstellbarkeit des Aufnahmekörpers begrenzt, so dass das Blechelement die Endlage bzw. Crashlage des Aufnahmekörpers festlegt. Die Anschlagkörper des Blechelements können dabei im Rahmen dessen Verformung mit geeigneten Flächen an der Fahrzeugsitzaufnahme, bevorzugt dem Grundkörper in Eingriff gelangen. Diese Ausgestaltung der Erfindung ermöglicht es somit, auf zusätzliche Bewegungsbegrenzungselemente zu verzichten, so dass sich die Fahrzeugsitzaufnahme besonders einfach und kostengünstig herstellen lässt.

Die konkrete Ausgestaltung des Grundkörpers, des Aufnahmekörpers sowie des Sperrelements des Fahrzeugsitzaufnahme ist grundsätzlich frei wählbar, sofern gewährleistet ist, dass im Falle einer Betätigung der Zug- und/oder Schubvorrichtung eine Verlagerung des Sperrelements erfolgt, durch die der Aufnahmekörper gegenüber dem Grundkörper verlagerbar ist. Nach einer besonders vorteilhaften Ausgestaltung der Erfindung ist das Sperrelement durch einen Schlittenkörper gebildet, der längsverschieblich zwischen einer Sperrlage und einer Freigabelage an einem ein Schienenprofil aufweisenden Grundkörper gelagert ist. Gemäß dieser Ausgestaltung der Erfindung ist vorgesehen, dass das Sperrelement in seiner Sperrlage über einen Formschluss den Aufnahmekörper an den Grundkörper arretiert. Zur Freigabe des Aufnahmekörpers ist es erforderlich, das als Schlittenkörper ausgebildete Sperrelement an oder in einem ein Schienenprofil aufweisenden Grundkörper so zu verlagern, dass der Schlittenkörper mit dem Aufnahmekörper außer Eingriff gelangt, wobei die Verschiebung über eine Betätigung der Zug- und/oder Schubvorrichtung, welche mechanisch mit dem Schlittenkörper verbunden ist, erfolgt.

Die Ausgestaltung des Grundkörpers mit oder als Schienenprofil mit einem daran verschiebbar angeordneten Schlittenkörper weist den Vorteil einer besonders zuverlässigen Verlagerung bei einem gleichzeitig geringen Bauraum auf. Eine schienenförmige Ausgestaltung des Grundkörpers gewährleistet darüber hinaus, insbesondere in Verbindung mit einer Zug- und/oder Schubvorrichtung, eine zuverlässige Verlagerbarkeit des Schlittenkörpers gegenüber dem Grundkörper, so dass der Schlittenkörper aus der Sperrlage in seine Freigabelage bewegt werden kann, in der der Aufnahmekörper gegenüber dem Grundkörper verschiebbar ist. Der Schlittenkörper eignet sich in besonders vorteilhafter Weise zur Betätigung durch eine Zug- und/oder Schubvorrichtung, wobei durch das Schienenprofil die Bewegungsrichtung des Sperrelements vorgegeben ist.

Die Herstellung der formschlüssigen Verbindung zwischen dem Sperrelement und dem Aufnahmekörper in der Normallage kann grundsätzlich in beliebiger Weise erfolgen. In besonders vorteilhafter Weise ist jedoch vorgesehen, dass das Sperrelement, bevorzugt der Schlittenkörper mindestens eine im Wesentlichen quer zur Verstellrichtung des Aufnahmekörpers aus der Normallage in die Crashlage verlaufende Lasche aufweist, die in der Sperrlage an einem Vorsprung des Aufnahmekörpers anliegt. Ein derart ausgestalteter Formschluss zwischen einer Lasche des Sperrelements, bevorzugt des Schlittenkörpers sowie einem Vorsprung des Aufnahmekörpers, wobei die Kontaktflächen in besonders vorteilhafterweise im Wesentlichen quer zur Verstellrichtung des Aufnahmekörpers aus der Normallage in die Crashlage verlaufen, ermöglicht eine besonders einfache und zuverlässige Lagesicherung des Aufnahmekörpers, wobei gleichzeitig mittels der Zug- und/oder Schubvorrichtung eine einfache Betätigung des Sperrelements möglich ist. Hierzu ist es lediglich erforderlich, das Sperrelement quer zur Verstellrichtung des Aufnahmekörpers zu verschieben, wodurch das Sperrelement mit dem Aufnahmekörper außer Eingriff gelangt.

Nach einer besonders vorteilhaften Weiterbildung der Erfindung ist ferner vorgesehen, dass das Sperrelement in Richtung auf seine Sperrlage vorgespannt ist, wobei besonders bevorzugt eine Schraubendruckfeder verwendet werden kann. Durch diese Ausgestaltung der Erfindung wird in besonders zuverlässiger Weise die Position des Sperrelements gegenüber dem Aufnahmekörper und dem Grundkörper in seiner Sperrlage gesichert. Darüber hinaus werden durch diese Ausgestaltung der Erfindung unter Umständen auftretende Klappergeräusche, welche aus einer Relativbewegung des Sperrelements gegenüber dem Grundkörper und/oder dem Aufnahmekörper resultieren könnten, besonders wirksam vermieden.

Zur Verbindung der Fahrzeugsitzaufnahme mit einem Fahrzeugsitz kann der Aufnahmekörper grundsätzlich in beliebiger Weise ausgestaltet sein. Ebenso sind die Anschlussmöglichkeiten eines nach einer vorteilhaften Weiterbildung vorgesehenen Absorptionselements grundsätzlich frei wählbar. Nach einer besonders vorteilhaften Ausgestaltung der Erfindung ist jedoch vorgesehen, dass der Aufnahmekörper eine Gewindeöffnung zur Verbindung mit dem Fahrzeugsitz sowie einen Haltebolzen zum Anschluss des Absorptionselements aufweist.

Die Verwendung einer Gewindeöffnung, welche besonders bevorzugt an die üblicherweise zur Befestigung der Fahrzeugsitze verwendeten Befestigungsschrauben angepasst ist, ermöglicht eine einfache und zuverlässige Anbindung des Fahrzeugsitzes an dem Aufnahmekörper, wobei auf die üblicherweise vorzusehenden Befestigungsschrauben zurückgegriffen werden kann. Die Verwendung eines Haltebolzens zum Anschluss des Absorptionselements lässt eine besonders einfache Verbindung des Absorptionselements mit dem Aufnahmekörper zu. Zudem lässt sich der Aufnahmekörper und/oder der Haltebolzen in seiner Längsachsenrichtung derart ausgestalten, dass eine zusätzliche Lagesicherung gegenüber dem Sperrelement erreichbar ist.

So kann nach einer besonders vorteilhaften Ausgestaltung der Erfindung beispielsweise vorgesehen sein, dass der Aufnahmekörper und/oder der Haltebolzen einen Absatz aufweist, welcher in der Sperrlage des Sperrelements an einer Haltefläche des Sperrelements anliegt, die in der Freigabelage mit dem Aufnahmekörper und/oder dem Haltebolzen außer Eingriff gelangt. So kann bspw. an dem Sperrelement ein Langloch ausgebildet sein, welches in Bewegungsrichtung des Sperrelements eine sich verändernde Öffnungsweite aufweist, wobei in der Sperrlage die Ränder des Langlochs mit einem Absatz des Haltebolzens in Eingriff befindlich sind und in der Freigabelage das Langloch eine Öffnungsweite aufweist, die eine Verlagerung des Haltebolzen in Richtung der Crashlage des Aufnahmekörpers erlaubt.

Die Ausgestaltung der Zug- und/oder Schubvorrichtung ist grundsätzlich frei wählbar. Eine entsprechende Vorrichtung erlaubt es, das Sperrelement aus seiner Sperrlage zu ziehen oder zu schieben, bis das Sperrelement mit dem Aufnahmekörper außer Eingriff gelangt, wobei die Zug- und/oder Schubvorrichtung hierzu mechanisch mit dem Sperrelement verbunden ist. Unter einer mechanischen Verbindung wird dabei eine Verbindung verstanden, die der Gestalt ist, dass die Bewegung der Zug- und/oder Schubvorrichtung auf das Sperrelement aufgrund mechanischer Kopplung übertragen wird.

Nach einer besonders vorteilhaften Ausgestaltung der Erfindung ist vorgesehen, dass die Zug- und/oder Schubvorrichtung durch einen Bowdenzug gebildet ist, der mit einerAuslösevorrichtung verbindbar ist. Die Verwendung eines Bowdenzugs zeichnet sich dadurch aus, dass dieser eine einfache und kostengünstige Anbindung der Fahrzeugsitzaufnahme an eine grundsätzlich beliebig ausgestaltete Auslösevorrichtung ermöglicht. Aufgrund der Flexibilität des Bowdenzuges besteht die Möglichkeit, die Auslösevorrichtung an beliebiger Stelle anzuordnen, wobei diese dann in einfacher Weise über den Bowdenzug mit der Fahrzeugsitzaufnahme gekoppelt werden kann. Die Auslösevorrichtung ist dabei derart ausgestaltet, dass durch diese im Crashfall eine Längung des Bowdenzuges erfolgt, wodurch eine Verlagerung des Sperrelements bewirkt werden kann.

Die Verbindung des Bowdenzuges mit der Fahrzeugsitzaufnahme, so dass eine Betätigung des Bowdenzugs eine Bewegung des Sperrelements bewirkt, kann grundsätzlich in beliebiger Weise erfolgen. Nach einer besonders vorteilhaften Ausgestaltung der Erfindung ist jedoch vorgesehen, dass der Bowdenzug eine in einer druckfesten Hülle geführte Seele, insbesondere ein Drahtseil oder Stahldraht aufweist, wobei die Seele in Zugrichtung lagestabil an dem Grundkörper angeordnet ist und die Hülle derart mit dem Sperrelement verbunden ist, dass von der Hülle Druckkräfte auf das Sperrelement übertragbar sind. Gemäß dieser Ausgestaltung der Erfindung erfolgt anstelle einer ebenfalls denkbaren Übertragung von Zugkräften durch die Bowdenzug-Seele eine Übertragung von Druckkräften durch die Hülle des Bowdenzugs, welche hierzu in Längsrichtung des Bowdenzugs druckfest ausgeführt ist. Eine Längung des Bowdenzugs bewirkt eine Übertragung von Druckkräften von der Hülle auf das mit der Hülle verbundene Sperrelement, wobei dann das Sperrelement aus seiner Sperrlage in Richtung auf seine Freigabelage verschoben wird.

Grundsätzlich besteht die Möglichkeit, die Hülle direkt mit dem Sperrelement zu verbinden, so dass Betätigungen der Bowdenzug-Seele unmittelbar zu einer Übertragung von Druckkräften von der Hülle auf das Sperrelement führen, was eine Verschiebung des Sperrelements bewirkt. Nach einer besonders vorteilhaften Ausgestaltung der Erfindung ist jedoch eine in Bowdenzugrichtung längenveränderliche Dämpfungseinheit zur Übertragung der Druckkräfte von der Hülle auf das Sperrelement vorgesehen, wobei sich die Dämpfungseinheit in Wirkverbindung mit dem Sperrelement und dem dem Sperrelement zugewandten Ende der Hülle befindet.

Die Dämpfungseinheit, die ortsfest an dem Sperrelement sowie der Hülle des Bowdenzugs angeordnet ist, ermöglicht es, Bewegungen der Hülle aufzunehmen, ohne dass diese unmittelbar zu einer Verlagerung des Sperrelements führen. Durch das Dämpfungselement können somit Bewegungen der Bowdenzug-Seele, welche noch nicht eine Auslösung der Fahrzeugsitzaufnahme bewirken sollen, aufgenommen werden, ohne dass es zu einer Verlagerung des Sperrelements kommt. Grundsätzlich könnte zwar auch das Sperrelement und der Aufnahmekörper derart ausgestaltet sein, dass diese nur im Falle einer vorbestimmten Längung des Bowdenzugs außer Eingriff gelangen. Durch die Verwendung einer Dämpfungseinheit wird jedoch eine Bewegung des Sperrelements gegenüber dem Aufnahmekörper so lange verhindert, bis die Betätigung des Bowdenzugs einen Betrag erreicht, welcher zuvor für eine Auslösung der Fahrzeugsitzaufnahme festgelegt wurde. Hierzu ist die Dämpfungseinheit in Bowdenzugrichtung längenveränderlich, so dass geringe Bewegungen der Bowdenzug über die Längenveränderlichkeit ausgeglichen werden können.

Die Ausgestaltung der Dämpfungseinheit ist dabei grundsätzlich frei wählbar. Nach einer besonders vorteilhaften Ausgestaltung der Erfindung ist jedoch vorgesehen, dass die Dämpfungseinheit ein in Druckrichtung der Hülle an dem Sperrelement anliegendes Anschlagelement und ein an dem dem Sperrelement zugewandten Ende der Hülle befestigtes Anschlusselement aufweist, wobei das Anschlagelement und das Anschlusselement relativ zueinander verschiebbar sind und zwischen dem Anschlusselement und dem Anschlagelement ein an diesen anliegendes Federelement angeordnet ist.

Gemäß dieser Ausgestaltung der Erfindung ist die Dämpfungseinheit durch das Anschlagelement mit dem Sperrelement und durch das Anschlusselement mit der Hülle verbunden. Das Anschlagelement und das Anschlusselement sind zueinander verschiebbar, wodurch die Längenveränderlichkeit der Dämpfungseinheit erreicht wird. Die Lage des Anschlagselements gegenüber dem Anschlusselement wird dabei durch ein Federelement gesichert, welches zum einen gewährleistet, dass es sich nicht zu Klappergeräuschen kommt und überdies sicherstellt, dass die Bowdenzug-Seele zwischen dem Anschlusselement und dem Anschlagelement gespannt ist.

Im Falle einer Betätigung des Bowdenzuges, d. h. einer Längung der Bowdenzug-Seele erfolgt eine Verlagerung des Endes der Hülle mit dem Anschlusselement in Richtung auf das Anschlagelement, wobei das Federelement komprimiert wird. Bei Erreichen eines zuvor festgelegten Bewegungsweges zwischen dem Anschlagelement und dem Anschlusselement, spätestens jedoch wenn das Anschlagelement mit dem Anschlusselement in Kontakt gelangt, erfolgt eine Übertragung der Druckkräfte der Hülle auf das Sperrelement, wodurch dieses dann aus seiner Sperrlage in Richtung auf seine Freigabelage bewegt wird, in der dann der Aufnahmekörper von seiner Normallage in seine Crashlage bewegt werden kann.

Die Auslösevorrichtung, welche mit der Fahrzeugsitzaufnahme über die Zug- und/oder Schubvorrichtung verbunden ist, kann grundsätzlich in beliebiger Weise ausgestaltet sein, wobei der flexible Bowdenzug grundsätzlich eine frei wählbare Ausgestaltung sowie Anordnung ermöglicht. Erfindungsgemäß ist vorgesehen, dass die Auslösevorrichtung für eine vorstehend beschriebene Fahrzeugsitzaufnahme eine in eine Sitzlehne integrierbare, mit einem Bowdenzug verbundene Druckplatte aufweist, wobei der Bowdenzug derart mit der Fahrzeugsitzaufnahme verbunden ist, dass eine Verlagerung der Druckplatte eine Übertragung von Druckkräften über die Hülle des Bowdenzugs auf das Sperrelement bewirkt. Eine entsprechende Ausgestaltung der Auslösevorrichtung lässt sich in besonders einfacher Weise ausgestalten. Insbesondere die Integrationsmöglichkeit in die Sitzlehne erlaubt es, die unmittelbar bei einem Heckcrash auf die Fahrzeuginsassen wirkenden Kräfte, sowie deren daraus resultierende Verlagerung in Richtung auf die Sitzlehne zu nutzen, um ggf. eine Auslösung der Fahrzeugsitzaufnahme zu bewirken. Durch die Beschleunigung des Körpers wirkt eine Kraft auf die Lehne ausgeübt, die eine Längung des Bowdenzugs bewirkt, welche aufgrund der Kopplung des Bowdenzugs mit der Fahrzeugsitzaufnahme dessen Auslösung hervorruft. Die Auslösevorrichtung lässt sich besonders einfach und kostengünstig herstellen und ist in einfacher Weise über einen Bowdenzug mit der Fahrzeugsitzaufnahme verbindbar.

Nach einer besonders vorteilhaften Ausgestaltung der Erfindung ist vorgesehen, dass die Druckplatte mit mindestens zwei Fahrzeugsitzaufnahmen verbunden ist, so dass auf separate Auslösevorrichtungen für die einzelnen Fahrzeugsitzaufnahmen verzichtet werden kann.

Ein Ausführungsbeispiel der Erfindung wird nachstehend mit Bezug auf die Zeichnungen erläutert. In den Zeichnungen zeigen:
Fig. 1 eine perspektivische Darstellung einer Fahrzeugsitzaufnahme in einer Sperrlage eines Sperrelements;
Fig. 2 eine perspektivische Darstellung der Fahrzeugsitzaufnahme von Fig. 1 in einer Freigabelage des Sperrelements;
Fig. 3 eine perspektivische Darstellung der Fahrzeugsitzaufnahme von Fig. 1 mit einem gegenüber einem Grundkörper der Fahrzeugsitzaufnahme verlagerten Aufnahmekörper;
Fig. 4 eine Schnittansicht der Fahrzeugsitzaufnahme von Fig. 1 in ihrer Verriegelungsstellung und
Fig. 5 eine Schnittansicht der Fahrzeugsitzaufnahme von Fig. 1 in der in Fig. 3 dargestellten Position.

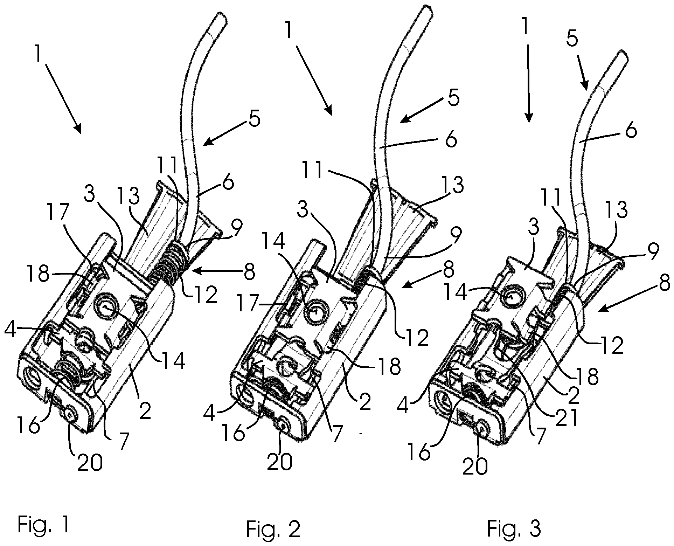

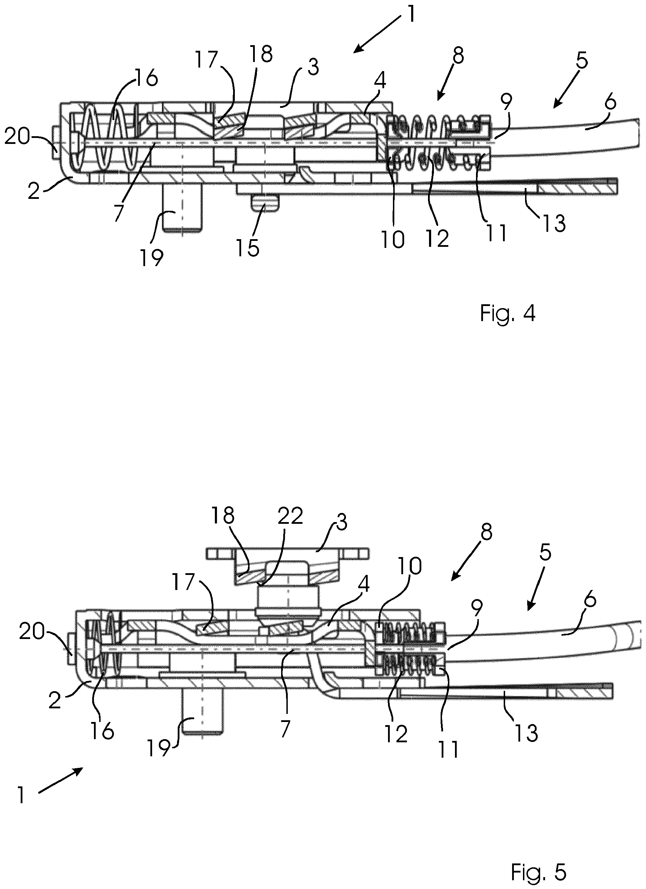

Eine in Fig. 1 sowie Fig. 4 in ihrer Normallage dargestellte Fahrzeugsitzaufnahme 1 dient zur Anordnung eines hiermit dargestellten Fahrzeugsitzes an einem hier ebenfalls nicht dargestellten Fahrzeugboden. Hierzu weist die Fahrzeugsitzaufnahme 1 einen mit dem Fahrzeugsitz verbindbaren Aufnahmekörper 3 sowie einen mit dem Fahrzeugboden verbindbaren Grundkörper 2 auf.

Der Aufnahmekörper 3 ist mit einer Gewindeöffnung 14 versehen, die ein Anschrauben einer hier nicht dargestellten Bodenschiene eines Fahrzeugsitzes an dem Aufnahmekörper 3 der Fahrzeugsitzaufnahme 1 ermöglicht. Der Grundkörper 2 der Fahrzeugsitzaufnahme 1 kann mit einer durch den Grundkörper 2 ragenden Befestigungsschraube 19 mit einem Fahrzeugboden verschraubt werden, so dass in der nachfolgend näher dargestellten Normallage der Fahrzeugsitzaufnahme 1 der Fahrzeugsitz zuverlässig über die Fahrzeugsitzaufnahme 1 an einem Fahrzeugboden befestigbar ist.

Die Fahrzeugsitzaufnahme 1 weist neben dem Aufnahmekörper 3 zur Verbindung mit dem Fahrzeugsitz sowie dem Grundkörper 2 zur Anordnung am Fahrzeugboden ein Sperrelement 4 auf, welches innerhalb des Grundkörpers 2 zwischen seiner in Figuren 1 und Figuren 4 dargestellten Sperrlage und seiner in den Figuren 2,3 und 5 dargestellten Freigabelage längsverschiebbar ist, wobei der Aufnahmekörper 3 in der Freigabelage gegenüber dem Grundkörper 2 verstellbar ist.

In der in den Figuren 1 und 4 dargestellten Normallage sichert das Sperrelement 4 die Lage des Aufnahmekörpers 3 an dem Grundkörper 2, wobei hierzu an dem Sperrelement 4 in Richtung auf den Aufnahmekörper 3 vorstehende Laschen 17 angeordnet sind, welche - bezogen auf die Einbaulage der Fahrzeugsitzaufnahme 1 - Vorsprünge 18 des Aufnahmekörpers 3 überdecken, so dass in Bewegungsrichtung des Aufnahmekörpers 3 zwischen diesem und dem Sperrelement 4 ein Formschluss besteht.

Um eine Verlagerung des Aufnahmekörpers 3 zu ermöglichen, ist das Sperrelement 4 in Längsachsenrichtung des Grundkörpers 2 verlagerbar. Bei einer Verlagerung des Sperrelements 4 aus seiner in Figur 1 und 4 dargestellten Sperrlage in die in den Figuren 2, 3 und 5 dargestellten Freigabelage gelangen die Laschen 17 des Sperrelements 4 mit den Vorsprüngen 18 des Aufnahmekörpers außer Eingriff. Gleichzeitig gelangen auch die Seitenflächen eines Langlochs 21 des Sperrelements 4 außer Eingriff mit einem Absatz 22 an dem Aufnahmekörper 3, so dass der Aufnahmekörper 3 insgesamt ungehindert gegenüber dem Sperrelement 4 verlagerbar ist.

Die Längsverstellung des Sperrelements 4 bewirkt somit eine Entriegelung des Aufnahmekörpers 3, wobei die verriegelnden Elemente, nämlich die Laschen 17 und die Ränder der Längsnut 21 des Sperrelements 4 mit den Gegenflächen des Aufnahmekörpers 3, nämlich den Vorsprüngen 18 und dem Absatz 22 außer Eingriff gelangen. Eine Lagesicherung des Sperrelements 4 in seiner Sperrlage erfolgt über eine Schraubendruckfeder 16, welche einenends an dem Grundkörper 2 und anderenends an dem Sperrelement 4 anliegt und dieses in Richtung auf die Sperrlage vorspannt.

Zur Verlagerung des Sperrelements 4 aus seiner Sperrlage in die Freigabelage weist die Fahrzeugsitzaufnahme 1 einen Bowdenzug 5 auf, welcher derart mit dem Sperrelement 4 verbunden ist, dass eine Längenänderung einer Bowdenzug-Seele 7 über eine Hülle 6 des Bowdenzugs 5 eine Verschiebung des Sperrelements 4 bewirkt. Hierzu ist das Ende der Bowdenzug-Seele 7 über einen Nippel 20 mit dem Grundkörper 2 verbunden und das der Fahrzeugsitzaufnahme 1 zugewandte Ende 9 der Hülle 6 liegt an einer Dämpfungseinheit 8 an, welche ihrerseits an dem Sperrelement 4 anliegt. Die Dämpfungseinheit 8 weist hierzu ein an dem Sperrelement 4 anliegendes Anschlagelement 10 sowie ein zur Verbindung mit dem Ende 9 der Hülle 6 vorgesehenes Anschlusselement 11 auf, wobei durch eine das Anschlusselement 11 und das Anschlagelement 10 beabstandende Schraubendruckfeder 12 eine ortsfeste Anordnung des Anschlusselements 11 und des Anschlagelements 10 gegenüber dem Sperrelement 4 bzw. dem Ende 9 der Hülle 6 gewährleistet wird.

Eine Betätigung des Bowdenzugs 5, durch die eine Längung der Bowdenzug-Seele 7 im Bereich einer hier nicht dargestellten Auslöseeinheit eintritt, bewirkt aufgrund der ortsfesten Anordnung des Endes der Bowdenzug-Seele 7 am Grundkörper 2 eine Verlagerung des Endes 9 der druckstabilen Hülle 6 in Richtung auf das Sperrelement 4, wobei das Dämpfungselement 8 zunächst gestaucht wird. Nach Beendigung des Stauchvorgangs bewirken die Druckkräfte, die durch die Hülle 6 aufgebracht werden, eine Verlagerung des Sperrelements 4 aus der in Figur 1 und 4 dargestellten Sperrlage in die in den Figuren 2, 3 und 5 dargestellten Freigabelage. Die Betätigung des Bowdenzugs 5 kann dabei in beliebiger Weise erfolgen, wobei dieser bspw. mit einer in einer Rückenlehne angeordneten Druckplatte verbunden sein kann, so dass durch die bei einem Heck-Crash auftretende Beschleunigung der Körper der Insassen eine Betätigung des Bowdenzugs 5 bewirkt, durch die die Fahrzeugsitzaufnahme 1 ausgelöst wird, d. h. das Sperrelement 4 aus seiner Sperrlage in eine Freigabelage bewegt wird.

Zum Energieabbau weist die Fahrzeugsitzaufnahme 1 ein als gewelltes Blechelement 13 ausgebildetes Absorptionselement auf, welches über einen Haltebolzen 15 mit dem Aufnahmekörper 2 verbunden ist. Bei einer Verlagerung des Aufnahmekörpers 3 aus seiner Normallage in Richtung auf eine Crashlage erfolgt somit eine Verformung des Blechelements 13 wobei diese umgelenkt und durch einen Schlitz an einer Unterseite des Grundkörpers 2 gezogen wird.

### Bezugszeichenliste

- 1: Fahrzeugsitzaufnahme
- 2: Grundkörper
- 3: Aufnahmekörper
- 4: Sperrelement/Schlittenkörper
- 5: Zug- und/oder Schubvorrichtung/Bowdenzug
- 6: Hülle
- 7: Seele
- 8: Dämpfungseinheit
- 9: Ende der Hülle
- 10: Anschlagelement
- 11: Ansschlusselement
- 12: Federelement
- 13: Absorptionselement/Blech
- 14: Gewindeöffnung
- 15: Haltebolzen
- 16: Federelement
- 17: Laschen
- 18: Vorsprünge
- 19: Befestigungsschraube
- 20: Nippel
- 21: Langloch
- 22: Absatz

## Patentansprüche

1. Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper,
**dadurch gekennzeichnet, dass**
der Aufnahmekörper (3) im Normalbetrieb durch ein verlagerbares und in der Normallage des Aufnahmekörpers (3) mit diesem und dem Grundkörper (2) in Eingriff befindliches Sperrelement (4) lagestabil am Grundkörper (2) angeordnet ist, wobei das Sperrelement (4) derart mit einer Zug- und/oder Schubvorrichtung (5) mechanisch verbunden ist, dass durch eine im Crashfall stattfindende Betätigung der Zug- und/oder Schubvorrichtung (5) das Sperrelement (4) mit dem Grundkörper (2) und/oder dem Aufnahmekörper (3) außer Eingriff gelangt.

2. Fahrzeugsitzaufnahme nach Anspruch 1, **dadurch gekennzeichnet, dass** die Zug- und/oder Schubvorrichtung durch einen Bowdenzug (5) gebildet ist, der mit einer Auslösevorrichtung verbindbar ist.

3. Fahrzeugsitzaufnahme nach Anspruch 1 oder 2, **dadurch gekennzeichnet, dass** der Bowdenzug (5) eine in einer druckfesten Hülle (6) geführte Seele (7), insbesondere ein Drahtseil oder Stahldraht aufweist, wobei
- die Seele (7) in Zugrichtung lagestabil an dem Grundkörper (2) angeordnet ist und
- die Hülle (6) derart mit dem Sperrelement (4) verbunden ist, dass von der Hülle (6) Druckkräfte auf das Sperrelement (4) übertragbar sind.

4. Fahrzeugsitzaufnahme nach einem der vorhergehenden Ansprüche, **gekennzeichnet durch** eine in Bowdenzugrichtung längenveränderliche Dämpfungseinheit (8) zur Übertragung der Druckkräfte von der Hülle (6) auf das Sperrelement (4), wobei sich die Dämpfungseinheit (8) in Wirkverbindung mit dem Sperrelement (4) und dem dem Sperrelement (4) zugewandten Ende (9) der Hülle (6) befindet.

5. Fahrzeugsitzaufnahme nach einem der vorhergehenden Ansprüche, **dadurch gekennzeichnet, dass** die Dämpfungseinheit (8) ein in Druckrichtung der Hülle (6) an dem Sperrelement (4) anliegendes Anschlagelement (10) und ein an dem dem Sperrelement (4) zugewandten Ende (9) der Hülle (6) befestigtes Anschlusselement (11) aufweist, wobei das Anschlagelement (10) und das Anschlusselement (11) relativ zueinander verschiebbar sind und zwischen dem Anschlusselement (11) und dem Anschlagelement (10) ein an diesen anliegendes Federelement (12) angeordnet ist.

6. Fahrzeugsitzaufnahme nach einem der vorhergehenden Ansprüche, **dadurch gekennzeichnet, dass** der Aufnahmekörper (3) in der Normallage formschlüssig mit dem Sperrelement (4) verbunden ist.

7. Fahrzeugsitzaufnahme nach einem der vorhergehenden Ansprüche, **dadurch gekennzeichnet, dass** an dem Aufnahmekörper (3) ein sich während der Bewegung aus der Normallage in Richtung auf die Crashlage elastisch und/oder plastisch verformbares Absorptionselement (13) angeordnet ist.

8. Fahrzeugsitzaufnahme nach einem der vorhergehenden Ansprüche, **dadurch gekennzeichnet, dass** das Absorptionselement durch ein Blechelement (13), bevorzugt gewelltes Blechelement gebildet ist.

9. Fahrzeugsitzaufnahme nach einem der vorhergehenden Ansprüche, **dadurch gekennzeichnet, dass** das Blechelement (13) Anschlagkörper zur Begrenzung der Verstellbewegung des Aufnahmekörpers (3) aus der Normallage aufweist.

10. Fahrzeugsitzaufnahme nach einem der vorhergehenden Ansprüche, **dadurch gekennzeichnet, dass** das Sperrelement durch einen Schlittenkörper (4) gebildet ist, der längsverschieblich zwischen einer Sperrlage und einer Freigabelage an einem ein Schieneprofil aufwesenden Grundkörper (2) gelagert ist.

11. Fahrzeugsitzaufnahme nach einem der vorhergehenden Ansprüche, **dadurch gekennzeichnet, dass** das Sperrelement (4) in Richtung auf seine Sperrlage vorgespannt ist.

12. Fahrzeugsitzaufnahme nach einem der vorhergehenden Ansprüche, **dadurch gekennzeichnet, dass** der Aufnahmekörper (3) eine Gewindeöffnung (14) zur Verbindung mit dem Fahrzeugsitz sowie einen Haltebolzen (15) zum Anschluss des Absorptionselements (13) aufweist.

13. Auslösevorrichtung für eine Fahrzeugsitzaufnahme nach einem der Ansprüche 1 bis 11, **gekennzeichnet durch** eine in eine Sitzlehne integrierbare, mit einem Bowdenzug (5) verbundene Druckplatte, wobei der Bowdenzug (5) derart mit der Fahrzeugsitzaufnahme (1) verbunden ist, dass eine Verlagerung der Druckplatte eine Übertragung von Druckkräften über die Hülle (6) des Bowdenzugs (5) auf das Sperrelement (4) bewirkt.

14. Auslösevorrichtung nach Anspruch 13, **dadurch gekennzeichnet, dass** die Druckplatte mit zwei Fahrzeugsitzaufnahmen (1) verbunden ist.
